# FASCICULE DE BREVET EUROPEEN

(11) **EP 4 382 875 B1**
(45) Date de publication et mention de la délivrance du brevet: **11.12.2024**
(21) Numéro de dépôt: 23212689.6
(22) Date de dépôt: 28.11.2023
(51) Int. Cl.: G01L 1/24

(54) **JAUGE DE DEFORMATION**
DEHNUNGSMESSSTREIFEN
STRAIN GAUGE

(30) Priorité: 08.12.2022 FR 2212957
(43) Date de publication de la demande: 12.06.2024
(73) Titulaire: Commissariat à l'Energie Atomique et aux Energies Alternatives, 75015 Paris (FR)
(72) Inventeur: JOURDAN, Guillaume, 38054 Grenoble Cedex 9 (FR); GELY, Marc, 38054 Grenoble Cedex 9 (FR)
(74) Mandataire: Cabinet Beaumont

(56) Documents cités:
- US-A1- 2016 246 000
- AHMED SALIM ET AL: "Inkjet printed kirigami inspired split ring resonator for disposable, low cost strain sensor applications", SMART MATERIALS AND STRUCTURES, IOP PUBLISHING LTD., BRISTOL, GB, vol. 29, no. 1, 29 November 2019 (2019-11-29), pages 15016, XP020348737, ISSN: 0964-1726, [retrieved on 20191129], DOI: 10.1088/1361-665X/AB548B

## Description

### Domaine technique

La présente description concerne de façon générale les circuits intégrés, et, plus particulièrement, les circuits intégrés mettant en œuvre une jauge de déformation.

### Technique antérieure

Des circuits intégrés connus comprennent une jauge de déformation piézorésistive ou photonique permettant de mesurer une déformation d'un élément, la jauge de déformation étant alors fixée à et en contact avec l'élément dont on mesure la déformation de sorte qu'une déformation de cet élément entraine une déformation correspondante de la jauge.

Des circuits intégrés photoniques connus proposent de mesurer un déplacement entre un premier élément et un deuxième élément mobiles l'un par rapport à l'autre. Ces circuits comprennent une jauge de déformation opto-mécanique comprenant un résonateur optique fixé au premier élément, de sorte qu'un déplacement des deux éléments l'un par rapport à l'autre entraine une variation (ou déformation) d'un espace mécanique entre le résonateur optique et le deuxième élément, ou une variation (ou déformation) d'un espace optique entre le résonateur et un guide d'onde fixé au deuxième élément. La variation de l'espace mécanique entraîne une modification de l'indice optique effectif du résonateur résultant de la modification de l'espace séparant les premier et deuxième éléments, et donc une variation correspondante et mesurable de sa longueur d'onde de résonance. La variation de l'espace optique, où le guide d'onde est couplé optiquement au résonateur optique, entraine une modification correspondante et mesurable du couplage optique entre le guide d'onde et le résonateur.

Par rapport aux jauges de déformations piézorésistives connues, les jauges de déformations opto-mécaniques connues permettent de s'affranchir des connexions électriques nécessaires à la polarisation et à la mesure de déformation de la jauge piézorésistive.

Toutefois, les jauges de déformation opto-mécaniques connues, en particulier celles permettant de mesurer un déplacement relatif de deux éléments l'un par rapport à l'autre, présentent d'autres inconvénients. Par exemple, la réalisation de l'espace mécanique peut nécessiter des moyens de lithographie peu accessibles chez de nombreux fondeurs. Les documents de l'art antérieur pertinents pour l'invention sont les suivants :
- AHMED SALIM ET AL : "Inkjet printed kirigami inspired split ring resonator for disposable, low cost strain sensor applications", SMART MATERIALS AND STRUCTURES, IOP PUBLISHING LTD, BRISTOL, GB, vol. 29, no. 1, 29 novembre 2019 (2019-11-29), page 15016
   et
- US 2016/246000 A1 (DURAFFOURG LAURENT [FR] ET AL) 25 août 2016 (2016-08-25).

Il serait souhaitable de disposer d'un dispositif photonique ou circuit intégré photonique comprenant une jauge de déformation opto-mécanique palliant tout ou partie des inconvénients des jauges de déformations opto-mécaniques connues.

### Résumé de l'invention

Un mode de réalisation pallie tout ou partie des inconvénients des dispositifs connus comprenant une jauge de déformation opto-mécanique connue pour mesurer un déplacement relatif entre deux éléments mobiles l'un par rapport à l'autre.

Un mode de réalisation prévoit un dispositif comprenant :
un substrat ;
une première couche reposant sur le substrat, la première couche comprenant une première partie et une deuxième partie mobiles l'une par rapport à l'autre ;
un résonateur optique annulaire défini dans une deuxième couche, le résonateur comprenant une première portion fixée à un premier plot d'ancrage connecté à la première partie de la première couche et une deuxième portion fixée à un deuxième plot d'ancrage connecté à la deuxième partie de la première couche.

Selon un mode de réalisation, les premier et deuxième plots d'ancrage sont disposés à l'intérieur du résonateur.

Selon un mode de réalisation, les première et deuxième portions du résonateur ont chacune une forme de demi-cercle.

Selon un mode de réalisation :
le premier plot a une forme de demi-disque ayant son centre confondu avec le centre de la première portion du résonateur et sa partie courbée tournée vers la première portion du résonateur ; et/ou
le deuxième plot a une forme de demi-disque ayant son centre confondu avec le centre de la deuxième portion du résonateur et sa partie courbée tournée vers la deuxième portion du résonateur.

Selon un mode de réalisation :
la première portion du résonateur est fixée au premier plot par des premières poutres définies dans la deuxième couche, chacune des premières poutres ayant une première extrémité connectée au résonateur et une deuxième extrémité connectée au premier plot ; et/ou
la deuxième portion du résonateur est fixée au deuxième plot par des deuxièmes poutres définies dans la deuxième couche, chacune des deuxièmes poutres ayant une première extrémité connectée au résonateur et une deuxième extrémité connectée au deuxième plot.

Selon un mode de réalisation, chacune des premières et deuxièmes poutres a une section transversale plus grande du côté de sa deuxième extrémité que du côté de sa première extrémité.

Selon un mode de réalisation :
la première portion du résonateur est fixée au premier plot par une première portion continue de la deuxième couche, l'ensemble de la première portion du résonateur, de la première portion de la deuxième couche et du premier plot ayant une forme de demi-disque ; et/ou
la deuxième portion du résonateur est fixée au deuxième plot par une deuxième portion continue de la deuxième couche, l'ensemble de la deuxième portion du résonateur, de la deuxième portion de la deuxième couche et du deuxième plot ayant une forme de demi-disque.

Selon un mode de réalisation :
la première portion du résonateur est fixée au premier plot par une première portion de la deuxième couche, l'ensemble de la première portion du résonateur, de la première portion de la deuxième couche et du premier plot ayant une forme de demi-disque, et la première portion de la deuxième couche comprend des ouvertures traversantes configurées pour favoriser un seul mode de propagation optique dans la première portion du résonateur ; et/ou
la deuxième portion du résonateur est fixée au deuxième plot par une deuxième portion de la deuxième couche, l'ensemble de la deuxième portion du résonateur, de la deuxième portion de la deuxième couche et du deuxième plot ayant une forme de demi-disque, et la deuxième portion de la deuxième couche comprend des ouvertures traversantes configurées pour favoriser un seul mode de propagation optique dans la deuxième portion du résonateur.

Selon un mode de réalisation, le résonateur comprend une troisième portion reliant la première portion du résonateur à la deuxième portion du résonateur, et une autre troisième portion reliant la deuxième portion du résonateur à la première portion du résonateur, l'ensemble des première, deuxième et troisièmes portions formant l'anneau du résonateur.

Selon un mode de réalisation, chacune des première et deuxième portions du résonateur a une section transversale configurée pour permettre un guidage multimode de la lumière, et chacune des troisièmes portions a une portion centrale ayant une section configurée pour permettre un guidage monomode de la lumière.

Selon un mode de réalisation, les première et deuxième parties de la première couche sont mobiles l'une par rapport à l'autre dans une première direction parallèle au substrat.

Selon un mode de réalisation, la deuxième couche est disposée entre le substrat et la première couche, les première et deuxième parties de la première couche étant suspendues au-dessus du substrat.

Selon un mode de réalisation, le dispositif comprend en outre un guide d'onde défini dans la deuxième couche et ayant une portion couplée optiquement au résonateur, ladite portion du guide d'onde étant soit couplée optiquement à la première portion du résonateur et fixée à la première partie de la première couche, soit couplée optiquement à la deuxième portion du résonateur et fixée à la deuxième partie de la première couche.

Selon un mode de réalisation :
la première partie de la première couche est fixe par rapport au substrat ;
la première couche comprend en outre une troisième partie suspendue au-dessus du substrat et mobile par rapport au substrat dans un plan parallèle au substrat ; et
le dispositif comprend un bras de levier, par exemple au moins en partie défini dans la première couche, configuré pour qu'un déplacement de la troisième partie par rapport au substrat dans ledit plan parallèle au substrat entraine un déplacement correspondant de la deuxième partie de la première couche par rapport à la première partie de la première couche dans ledit plan parallèle au substrat.

Selon un mode de réalisation :
la première partie de la première couche est fixe par rapport au substrat ;
la première couche comprend en outre une troisième partie suspendue au-dessus du substrat et mobile en rotation autour d'un axe parallèle au substrat ; et
le dispositif comprend un bras de levier, par exemple en partie défini dans la première couche, configuré pour qu'une rotation de la troisième partie autour dudit axe entraine un déplacement correspondant de la deuxième partie de la première couche par rapport à la première partie de la première couche dans un plan parallèle au substrat.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, par une vue de dessus schématique, un exemple d'un mode de réalisation d'un dispositif ;
la figure 2 représente une vue en coupe schématique prise dans le plan AA de la figure 1 ;
la figure 3 représente une vue en coupe schématique prise dans le plan BB de la figure 1 ;
la figure 4 représente une vue en coupe schématique prise dans le plan CC de la figure 1 ;
la figure 5 représente une vue en coupe schématique prise dans le plan DD de la figure 1 ;
la figure 6 représente, par une vue de dessus, partielle et schématique, une variante de réalisation d'une partie du dispositif des figures 1 à 5 ;
la figure 7 représente, par une vue de dessus, partielle et schématique, une autre variante de réalisation d'une partie du dispositif des figures 1 à 5 ;
la figure 8 représente, par une vue de dessus, partielle et schématique, encore une autre variante de réalisation d'une partie du dispositif des figures 1 à 5 ;
la figure 9 représente, par une vue de dessus, partielle et schématique, encore une autre variante de réalisation d'une partie du dispositif des figures 1 à 5 ; et
la figure 10 représente, par une vue de dessus schématique, un autre exemple de mode de réalisation du dispositif des figures 1 à 5.

### Description des modes de réalisation

Par souci de clarté, seuls les étapes et éléments utiles à la compréhension des modes de réalisation décrits ont été représentés et sont détaillés. En particulier, les procédés de fabrication des circuits photoniques décrits ici n'ont pas été détaillés, la fabrication des modes de réalisation et variantes de ces circuits photoniques à partir d'étapes usuelles de fabrication des circuits photoniques connus étant à la portée de la personne du métier à partir de la description ci-dessous.

Sauf précision contraire, lorsque l'on fait référence à deux éléments connectés mécaniquement entre eux, cela signifie directement en contact sans éléments intermédiaires, et lorsque l'on fait référence à deux éléments reliés ou couplés (en anglais "coupled") mécaniquement entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Il est ici proposé un dispositif comprenant un substrat, une première couche reposant de manière indirecte sur le substrat et un résonateur optique annulaire défini dans une deuxième couche, dans lequel la première couche comprend une première partie et une deuxième partie configurée pour être mobiles l'une par rapport à l'autre, par exemple dans une direction parallèle au substrat, et dans lequel le résonateur a une première portion fixée à la première partie de la première couche et une deuxième portion fixée à la deuxième partie de la deuxième couche.

Ainsi, lorsque les première et deuxième parties de la première couche se déplacent l'une par rapport à l'autre, par exemple dans la direction susmentionnée, des portions du résonateur qui relient les première et deuxième portions du résonateur pour former l'anneau du résonateur se déforment, par exemple se compriment ou s'étendent dans la direction susmentionnée. Ces déformations de l'anneau entraînent une modification correspondante de sa longueur d'onde de résonance. En mesurant la variation de la longueur d'onde de résonance de l'anneau, il est possible de connaître, donc de mesurer, le déplacement relatif des première et deuxième parties de la première couche l'une par rapport à l'autre.

Sauf indication contraire, lorsque l'on fait référence à un élément ancré (en anglais "anchored"), fixé (en anglais "fixed"), attaché (en anglais "attached") ou accroché (en anglais "hooked") à la première couche, cela signifie que cet élément est couplé mécaniquement à la première couche, et que cet élément est couplé mécaniquement au substrat par l'intermédiaire de la première couche. Par exemple, dit autrement, cela signifie que la liaison mécanique entre cet élément et la première couche est plus courte (ou plus directe) que chaque liaison mécanique que cet élément a avec le substrat.

De manière symétrique, sauf indication contraire, lorsque l'on fait référence à un élément ancré, fixé, attaché ou accroché au substrat, cela signifie que cet élément est couplé mécaniquement au substrat, et que cet élément est couplé mécaniquement à la première couche par l'intermédiaire du substrat. Par exemple, dit autrement, cela signifie que la liaison mécanique entre cet élément et le substrat est plus courte (ou plus directe) que chaque liaison mécanique que cet élément a avec la première couche.

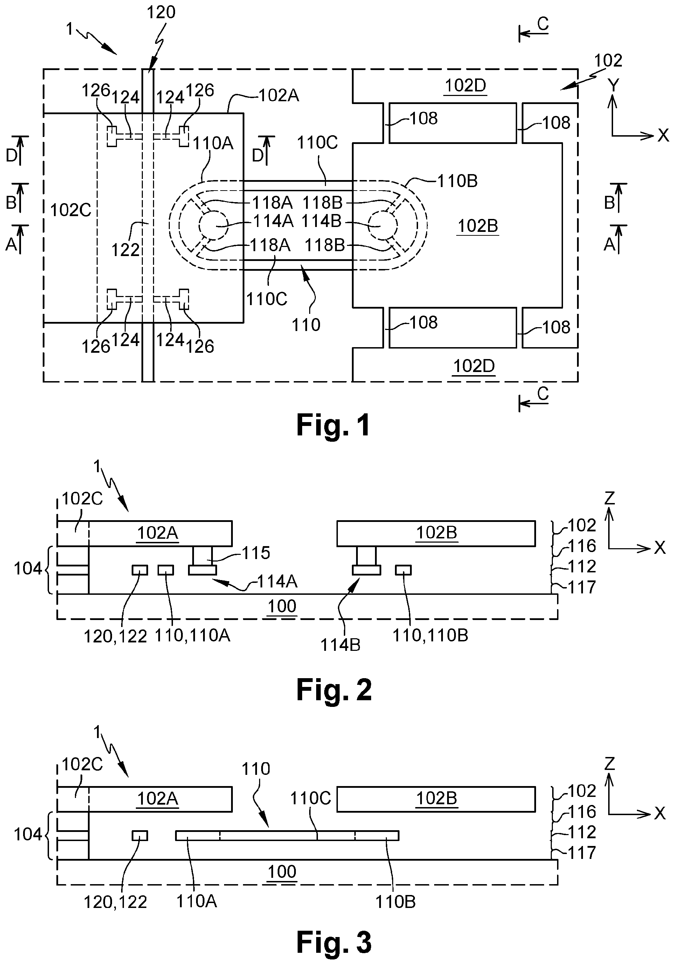

Des exemples de modes de réalisation et de variantes de réalisation d'un tel dispositif vont maintenant être décrits en relation avec les figures 1 à 10.

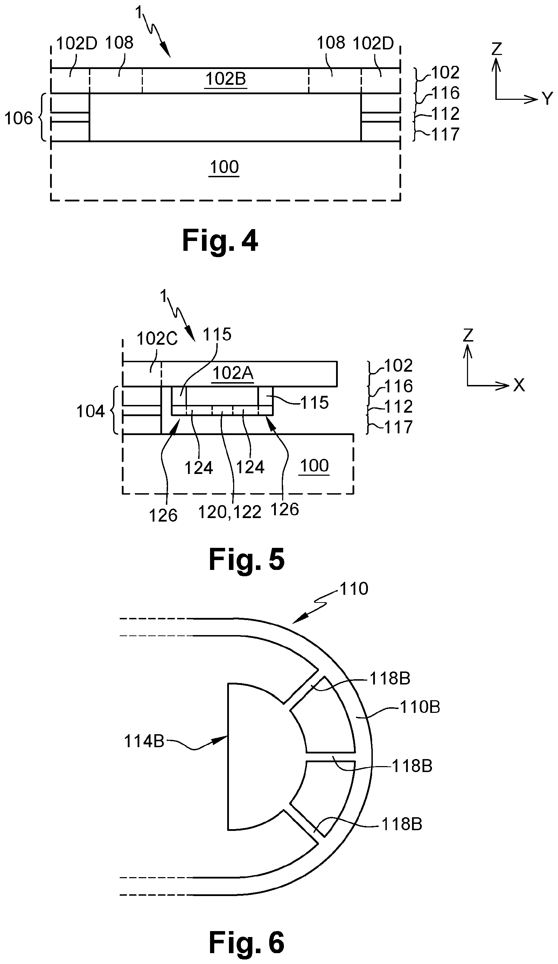

La figure 1 représente, par une vue de dessus schématique, un exemple d'un mode de réalisation d'un tel dispositif 1. La figure 2 est une vue en coupe schématique du dispositif 1 prise dans le plan AA de la figure 1, la figure 3 étant une vue en coupe schématique du dispositif 1 prise dans le plan BB de la figure 1, la figure 4 étant une vue en coupe schématique du dispositif 1 prise dans le plan CC de la figure 1 et la figure 5 étant une vue en coupe schématique du dispositif 1 prise dans le plan DD de la figure 1.

Le dispositif 1 comprend un substrat 100, par exemple un substrat semiconducteur. Dit autrement, le circuit 1 est formé sur le substrat 100. A titre d'exemple, le substrat 100 a une épaisseur de plusieurs centaines de micromètres, par exemple une épaisseur d'au moins 200 µm. A titre d'exemple alternatif, le substrat 100 peut avoir été aminci et présenter une épaisseur inférieure à 200 µm.

Le dispositif 1 comprend en outre une couche 102. A titre d'exemple, l'épaisseur de la couche 102 est inférieure à 100 µm, par exemple inférieure à 10 µm, voire inférieure à 1 µm.

La couche 102 comprend une partie 102A et une partie 102B. De préférence, chacune des deux parties 102A et 102B est suspendue au-dessus du substrat 100, c'est-à-dire qu'un espace libre est ménagé entre le substrat 100 et chacune de ces parties 102A et 102B. Les parties 102A et 102B sont mobiles l'une par rapport à l'autre, de préférence dans une direction parallèle au substrat 100. Dans l'exemple des figures 1 à 5, les deux parties 102A et 102B sont mobiles l'une par rapport à l'autre dans une direction X, parallèle au substrat 100.

A titre d'exemple, l'une des parties 102A et 102B est fixe par rapport au substrat et l'autre des parties 102A et 102B est mobile par rapport au substrat 100, de sorte que les parties 102A et 102B soient mobiles l'une par rapport à l'autre. A titre d'exemple alternatif, les deux parties 102A et 102B sont mobiles par rapport au substrat 100, de sorte que les deux parties 102A et 102B soient mobiles l'une par rapport à l'autre.

A titre d'exemple, lorsqu'une partie 102A ou 102B de la couche 102 est fixe par rapport au substrat 100, cela signifie que cette partie de la couche 102 est connectée mécaniquement à une autre partie de la couche 102 qui est fixée au substrat par un empilement de couches en contact deux à deux, cet empilement étant connecté d'une part au substrat et d'autre part à cette autre partie de la couche 102.

En outre, lorsqu'une partie 102A ou 102B est mobile par rapport au substrat 100, cela signifie que cette partie de la couche 102 est couplée mécaniquement à une autre partie de la couche 102 qui est fixée au substrat, par exemple par un empilement de couches en contact deux à deux. Cet empilement est connecté d'une part au substrat et d'autre part à cette autre partie de la couche 102. En outre, le couplage mécanique de la partie mobile 102A ou 102B à cette autre partie de la couche 102 qui est fixée au substrat est mis en œuvre par des liaisons déformables. De préférence, chaque liaison déformable correspond à, ou comprend, une portion de couche 102. A titre d'exemple alternatif, chaque liaison déformable correspond à, ou comprend, une portion d'une autre couche que la couche 102, la couche 102 reposant sur cette autre couche ou cette autre couche reposant sur la couche 102.

Dans l'exemple particulier des figures 1 à 5, la partie 102A est fixe par rapport au substrat 100 et la partie 102B est mobile par rapport au substrat 100, et donc par rapport à la partie 102A, par exemple dans la direction X.

Par exemple, la partie 102A de la couche 102 est connectée mécaniquement à une partie 102C de la couche 102, la partie 102C étant fixée au substrat 100 par un empilement 104 de couches. L'empilement 104 est connecté mécaniquement au substrat 100 et à la partie 102C de la couche 102. En figures 1, 2, 3 et 5, la limite entre la partie 102A et la partie 102C de la couche 102 est représentée par un trait en pointillés.

Par exemple, la partie 102B de la couche 102 est couplée à une partie 102D de la couche 102, la partie 102D étant fixée au substrat 100 par un empilement 106 de couches. L'empilement 106 est, par exemple, identique à l'empilement 104 à la différence que l'empilement 106 est connecté mécaniquement au substrat 100 et à la partie 102D de la couche 102 au lieu d'être connecté mécaniquement au substrat 100 et à la partie 102C de la couche 102. En outre, les parties 102B et 102D de la couche 102 sont couplées mécaniquement l'une à l'autre par des liaisons déformables 108, par exemple des liaisons 108 déformables dans la direction X. Les liaisons 108 comprennent, par exemple, chacune une portion de la couche 102. Par exemple chaque liaison 108 est une partie correspondante de la couche 102. En figure 4, les limites entre la partie 102B et les liaisons 108 d'une part, et entre les liaisons 108 et la partie 102D d'autre part sont représentées en pointillés.

Dans l'exemple des figures 1 à 5, chaque liaison 108 correspond à une poutre, par exemple définie dans la couche 102, chaque poutre ayant une extrémité connectée à la partie 102D de la couche 102 et une autre extrémité connectée à la partie 102B de la couche 102. Dans d'autres exemples non illustrés, chaque liaison 108 correspond à un ou plusieurs méandres, par exemple définis dans la couche 102. La personne du métier sera en mesure de prévoir d'autres formes pour les liaisons 108.

Le dispositif 1 comprend en outre un résonateur optique annulaire 110. A titre d'exemple, le résonateur à la forme d'une piste d'athlétisme ("racetrack" en anglais), c'est-à-dire d'un anneau comprenant deux parties en demi-cercle reliées entre elles par deux parties rectilignes.

Le résonateur 110 est formé dans, ou défini dans, une couche 112. Dit autrement, le résonateur 110 est mis en oeuvre par une portion de la couche 112. La couche 112 est en un matériau adapté à guider la lumière aux longueurs d'onde de fonctionnement du circuit 1. Par exemple, la couche 112 est en silicium, en nitrure de silicium, en arsenic gallium ou en germanium.

Selon un mode de réalisation, comme cela est illustré par les figures 1 à 5, la couche 112 est disposée entre le substrat 100 et la couche 102. Dans ce cas, l'empilement 104 et/ou l'empilement 106 peuvent comprendre une portion de la couche 112. En figure 1, les éléments, notamment les portions de couche 112, disposés sous la couche 102 sont délimités par des traits en pointillé.

Dans une variante de réalisation non détaillée et non illustrée, la couche 112 est disposée au-dessus de la couche 102, la couche 102 étant elle-même disposée au-dessus du substrat 100.

La couche 112 est séparée de la couche 102 par une unique couche 116.

Le résonateur 110 comprend une première portion 110A fixée à la partie 102A de la couche 102, et une deuxième portion 110B fixée à la partie 102B de la couche 102. Plus exactement, la portion 110A du résonateur 110 est fixée à un plot d'ancrage 114A qui est connecté mécaniquement à la partie 102A de la couche 102, et la portion 110B du résonateur 110 est fixée à un plot d'ancrage 114B qui est connecté mécaniquement à la partie 102B de la couche 102. La portion 110A correspond de préférence à l'une des deux portions en demi-cercle de l'anneau 110, la portion 110B correspondant de préférence à l'autre des deux portions en demi-cercle de l'anneau 110.

De préférence, le résonateur 110 n'est pas fixé au substrat 100, c'est-à-dire qu'il n'est pas fixé à un plot d'ancrage connecté au substrat 100.

De préférence, le dispositif 1 ne comprend que deux plots 114A et 114B permettant de fixer le résonateur 110 à la couche 102.

Entre les deux portions 110A et 110B, le résonateur comprend deux portions 110C, par exemple rectilignes, reliant chacune la portion 110A à la portion 110B de sorte que l'ensemble des portions 110A, 110B et 110C mises bout à bout forme l'anneau du résonateur 110. De préférence, lorsque les portions 110C sont rectilignes, elles sont alignées avec la direction X de déplacement des parties 102A et 102B l'une par rapport à l'autre. Dans d'autres exemples, ces portions 110C peuvent ne pas être rectilignes, par exemple comprendre une ou plusieurs courbes, bien qu'elles soient de préférence chacune sensiblement alignée dans le sens de leur longueur avec la direction X de déplacement.

Lorsque les deux parties 102A et 102B de la couche 102 se déplacent l'une par rapport à l'autre, cela déforme, par exemple étire ou comprime, les portions 110C du résonateur 110, ce qui entraine une variation de sa longueur d'onde de résonance. Ce sont donc les portions 110C du résonateur 110 qui font ici office de jauge de déformation opto-mécanique.

La portion 110A, respectivement 110B, du résonateur 110 est fixée au plot 114A, respectivement 114B, par une ou plusieurs portions de la couche 112 s'étendant chacune depuis la portion 110A, respectivement 110B, jusqu'au plot 114A, respectivement 114B.

De préférence, les plots d'ancrage 114A, 114B fixant le résonateur 110 à la couche 102 sont disposés à l'intérieur de l'anneau 110, c'est-à-dire que, en vue de dessus, les plots 114A, 114B sont disposés dans une région délimitée latéralement par le bord interne de l'anneau 114. Ainsi, chaque portion de la couche 112 qui fixe le résonateur 110 à un plot 114A ou 114B est en contact avec le bord interne du résonateur 110 plutôt qu'avec le bord externe du résonateur 110, ce qui permet de limiter les pertes optiques dans le résonateur 110.

Chaque plot 114A, 114B comprend, par exemple, une portion de la couche 112 et une région 115 s'étendant depuis cette portion de la couche 112 jusqu'à la couche 102. Dit autrement, dans chaque plot 114A, 114B, la région 115 est connectée mécaniquement à la couche 102 et à la portion de la couche 112 faisant partie du plot. A titre d'exemple, chaque région 115 correspond à une portion de la couche 116. A titre d'exemple alternatif, chaque région 115 est en un matériau différent de celui de la couche 116, de sorte que la couche 116 puisse être gravée sélectivement par rapport à ce matériau.

Dans un mode de réalisation où la couche 112 est disposée entre le substrat 100 et la couche 102, la couche 112 est séparée du substrat 100 par une unique couche 117. Dans un tel mode de réalisation, chaque empilement 104, 106 peut alors comprendre une portion de la couche 116 et une portion de la couche 117 entre lesquelles peut être disposée une portion de la couche 112. En outre, dans un tel mode de réalisation, le résonateur 110 est alors suspendu sous un plan comprenant la face de la couche 102 qui est en regard du substrat 100, et au-dessus d'un plan comprenant la face du substrat 100 qui est en regard de la couche 102. Dit de manière plus générale, le résonateur 110 est alors suspendu à la couche 102, entre la couche 102 et le substrat.

Dans une variante de réalisation (non illustrée) où la couche 112 est disposée au-dessus de la couche 102, le résonateur 110 est suspendu au-dessus de la couche 102. Dans une telle variante, lorsque la partie 102A ou 102B est fixe par rapport au substrat 100, cette partie de la couche 102 peut être fixée au substrat par un empilement 104 de couches en contact deux à deux plutôt que d'être d'abord connectée mécaniquement à une autre partie de la couche 102 qui est fixée au substrat 100 par un empilement 104 de couches. La partie 102A ou 102B de la couche 102 qui est fixe par rapport au substrat n'est alors pas suspendue au-dessus du substrat 100.

Selon un mode de réalisation, comme cela est illustré par la figure 1, en vue de dessus, la forme de chaque plot 114A, 114B est sensiblement celle d'un disque.

Selon un mode de réalisation, comme cela est illustré par la figure 1, la portion 110A respectivement 110B, du résonateur 110 est fixée au plot 114A, respectivement 114B, par des poutres 118A, respectivement 118B, définies dans la couche 112. Dit autrement, la portion 110A respectivement 110B, du résonateur 110 est fixée au plot 114A, respectivement 114B, par des portions 118A, respectivement 118B, de la couche 112, chaque portion 118A, 118B ayant la forme d'une poutre. Chaque poutre 118A, respectivement 118B, a une extrémité connectée à la portion 110A, respectivement 110B, du résonateur 110, et une autre extrémité connectée au plot 114A, respectivement 114B.

Selon un mode de réalisation, chaque poutre 118A, 118B a une section transversale sensiblement constante sur toute sa longueur. Selon une variante de réalisation, chaque poutre 118A, 118B a une section transversale plus faible à son extrémité connectée avec le résonateur 110 qu'à son extrémité connectée au plot.

Selon un mode de réalisation, les portions 110A, 110B et 110C du résonateur 110 ont chacune une section transversale configurée pour permettre un guidage monomode de la lumière dans le résonateur 110. En variante, les portions 110A et 110B peuvent avoir une section transversale configurée pour permettre un guidage multimode de la lumière, et au moins une portion centrale de chacune des portions 110C a une section transversale configurée pour permettre un guidage monomode de la lumière. Dans une telle variante, la personne du métier est en mesure d'assurer une transition progressive des dimensions de la section transversale des portions 110A et 110B vers les dimensions de la section transversale des parties centrales des portions 110C, de sorte à assurer une variation progressive de l'indice optique effectif entre ces portions.

Pour que de la lumière se propage dans le résonateur 110, le dispositif 1 comprend en outre un guide d'onde 120. Le guide d'onde 120 est, comme le résonateur 110, défini dans la couche 112, c'est-à-dire qu'il correspond à, ou est constitué par, une portion de la couche 112. Le guide d'onde 120 comprend une portion 122 qui est optiquement couplée au résonateur 110.

Par exemple, la portion 122 du guide d'onde 120 est couplée à la portion 110A du résonateur 110 et est alors fixée à la partie 102A de la couche 102 comme cela est illustré dans l'exemple des figures 1 à 5. A titre d'exemple alternatif, la portion 122 du guide d'onde 120 est couplée optiquement à la portion 110B du résonateur 110 et est alors fixée à la partie 102B de la couche 102. Le fait que la portion 122 du guide d'onde 120 soit fixée à la même partie 102A ou 102B que la portion 110A ou 110B du résonateur avec laquelle la portion 122 est couplée optiquement permet de maintenir constant l'espace de couplage optique entre le guide d'onde 120 et le résonateur 110.

De préférence, la portion 122 du guide d'onde 120 s'étend longitudinalement dans une direction Y parallèle au substrat 100 et orthogonale à la direction X.

De préférence, lorsque l'une des parties 102A et 102B de la couche 102 est fixe par rapport au substrat 100, la portion 122 du guide d'onde 120 est fixée à cette partie fixe par rapport au substrat, de sorte à éviter des déformations du guide d'onde 120 lors d'un mouvement relatif des parties 102A et 102B l'une par rapport à l'autre.

La portion 122 du guide d'onde 120 est fixée à la couche 102 par des bras de maintien 124 et des plots d'ancrage 126.

Les plots 126 sont, par exemple, similaires aux plots 114A, 114B, c'est-à-dire qu'ils comprennent des empilements de portions de couches similaires et sont connectés chacun mécaniquement à la couche 102. Par exemple, chaque plot 126 comprend une portion de la couche 112 et une région 115 correspondant à une portion de la couche 116 ou à un matériau par rapport auquel la couche 116 peut être gravée sélectivement, la région 115 étant connectée à cette portion de la couche 112 et à la couche 102.

Chaque bras de maintien 124 est, par exemple, une portion de la couche 112 s'étendant depuis la portion 122 du guide d'onde 120 jusqu'à un plot 126 correspondant, c'est-à-dire une portion de la couche 112 ayant une extrémité connectée à la portion 122 du guide d'onde 120 et une extrémité connectée à ce plot 126. Dans l'exemple des figures 1 à 5, les bras 124 ont chacun la forme d'une poutre bien que, dans d'autres exemples non illustrés, chaque bras 124 puisse correspondre à plusieurs poutres mises bout à bout pour former au moins un méandre ou puisse avoir encore d'autres formes.

En figure 5, la limite entre la portion 122 du guide d'onde 120 et chaque bras 124, et la limite entre chaque bras 124 et la portion de la couche 112 du plot 126 auquel ce bras est connecté sont représentées en pointillés.

Dans un mode de réalisation où la couche 112 est disposée entre la couche 102 et le substrat 100, la portion 122 du guide d'onde 120 est, comme le résonateur 110, suspendue à la couche 102, entre la couche 102 et le substrat 100.

Dans une variante de réalisation (non illustrée) où la couche 112 est disposée au-dessus de la couche 102, le guide d'onde 120 est, comme le résonateur 110, suspendu au-dessus de la couche 102.

A titre d'exemple, lors de la fabrication du circuit 1 dans le cas où la couche 112 est disposée entre la couche 102 et le substrat 100, la couche 112 repose initialement sur la couche 117, reposant elle-même sur le substrat 100. Puis différents éléments, dont le résonateur 110, sont définis par gravure dans la couche 112. A cette étape de gravure de la couche 112, une portion de la couche 112 peut être laissée en place à l'emplacement de chaque empilement 104, 106, de sorte que cet empilement comprenne cette portion de la couche 112. Ensuite, la couche 116 est formée sur l'ensemble puis la couche 102 est formée, par dépôt ou par report, sur la couche 116. La région 115 de chaque plot d'ancrage 114A, 114B, 126 peut être en le même matériau que la couche 102 en prévoyant une ouverture dans la couche 116 jusqu'à la couche 112, puis en remplissant l'ouverture avec le matériau de la couche 102 lors du dépôt de cette couche 102. Alternativement, la région 115 de chaque plot d'ancrage 114A, 114B, 126 peut être en un matériau autre que celui de la couche 102 et celui de la couche 116 en prévoyant une ouverture dans la couche 116 jusqu'à la couche 112, et en remplissant l'ouverture avec ce matériau préalablement à la formation de la couche 102. Alternativement, la région 115 de chaque plot d'ancrage 114A, 114B, 126 peut correspondre à une portion de la couche 116. Une fois la couche 102 formée sur la couche 116, des portions de la couche 102 sont retirées lors d'une étape de gravure, puis des portions des couches 116 et 117 sont retirées par gravure sacrificielle sélective par rapport aux couches 102 et 112 et au substrat 100 pour obtenir le circuit 1. A titre d'exemple, lorsque les régions 115 sont en un matériau différent de celui de la couche 116, la ou les gravures des couches 116 et 117 sont également sélectives par rapport au matériau des régions 115. A titre d'exemple alternatif, lorsque les régions 115 sont des portions de la couche 116, lors de la gravure de la couche 116, la personne du métier est en mesure de prévoir des ouvertures dans la couche 102 et/ou dans la couche 112 de sorte qu'en contrôlant le temps de gravure de la couche 116 et/ou de la couche 117, les régions 115 soient laissée en place à la fin de la gravure. Dans ce dernier cas, dans chaque plot 114A, 114B et 126, la région 115 peut être légèrement en retrait par rapport au bord externe du plot.

Dans l'exemple de procédé de fabrication décrit ci-dessus, lorsque la couche 112 est une couche semiconductrice, par exemple en silicium, et que la couche 117 est une couche isolante, par exemple en oxyde de silicium, la couche 112 peut correspondre à la couche semiconductrice d'une structure de type semiconducteur sur isolant (SOI de l'anglais "Semiconductor On Insulator") formée sur le substrat 100.

Dans l'exemple de procédé de fabrication décrit ci-dessus, dans le circuit 1, chaque empilement 104, 106 comprend une portion laissée en place de la couche 117, et peut ou non comprendre une portion laissée en place de la couche 116. En effet, il est possible de retirer la couche 116 de l'empilement en prévoyant que la couche 102 soit formée par dépôt, directement au contact de la couche 112 à l'emplacement de l'empilement, la couche 102 étant ensuite, par exemple, planarisée.

A titre d'exemple alternatif, lors de la fabrication du circuit 1 dans le cas où la couche 112 est disposée entre la couche 102 et le substrat 100, la couche 102 correspond à une portion d'un premier substrat, par exemple semiconducteur, par exemple en silicium, la couche 116 reposant alors sur ce premier substrat et la couche 112 reposant alors sur la couche 116. De la même manière que précédemment, des éléments, dont le résonateur 110, sont formés dans la couche 112. Un matériau de remplissage, par exemple identique au matériau de la couche 116, est déposé puis planarisé en s'arrêtant avant ou sur la couche 112. Le substrat 100 revêtu de la couche 117 est ensuite reporté sur la structure avant d'amincir le premier substrat de manière à n'en laisser que la couche 102. Les étapes suivantes pour obtenir le circuit 1 sont ensuite similaires à ce qui a été décrit pour l'autre exemple ci-dessus.

Dans cet autre exemple de procédé de fabrication, lorsque la couche 112 est une couche semiconductrice, par exemple en silicium, et que la couche 116 est une couche isolante, par exemple en oxyde de silicium, la couche 112 peut correspondre à la couche semiconductrice d'une structure de type semiconducteur sur isolant (SOI de l'anglais "Semiconductor On Insulator") formée sur le premier substrat.

Bien entendu, les deux façons de fabriquer le circuit 1 qui sont décrites ci-dessus ne sont que des exemples, et la personne du métier est en mesure, à partir de la présente description, de prévoir d'autres procédés de fabrication du circuit 1 en utilisant des étapes qui sont chacune usuelle dans la fabrication des circuits photoniques. En particulier, la personne du métier est en mesure de prévoir les procédés de fabrication permettant de fabriquer le circuit 1 dans le cas où la couche 112 est disposée au-dessus de la couche 102.

De préférence, le circuit 1 ne comprend qu'une seule couche 116 et une seule couche 117. Toutefois, la couche 116 peut correspondre à une pluralité de couches empilées les unes sur les autres et/ou la couche 117 peut correspondre à une pluralité de couches empilées les unes sur les autres.

A titre d'exemple, les deux couches sacrificielles 116 et 117 sont en un même matériau, gravable sélectivement par rapport au(x) matériau(x) des couches 102 et 112, du substrat 100, et, par exemple, de chaque région 115. Toutefois, dans d'autres exemples, les couches 116 et 117 peuvent être en des matériaux différents, chacun gravable sélectivement par rapport au(x) matériau(x) des couches 102 et 112, du substrat 100, et, par exemple, de chaque région 115.

A titre d'exemple, le substrat 100 est en silicium ou en arsenic-gallium.

A titre d'exemple, la couche 117 est une couche d'oxyde de silicium ou un polymère photonique tel que par exemple le BCB (benzocyclobutene).

A titre d'exemple, la couche 116 est une couche d'oxyde de silicium.

A titre d'exemple, chaque région 115 est en silicium, en nitrure de silicium ou en oxyde de silicium.

Bien entendu, la personne du métier est en mesure d'adapter les matériaux des couches 116, 112, 117 et 102, du substrat 100 et, par exemple, des régions 115 en conservant les sélectivités de gravure indiquées précédemment.

A titre d'exemple, l'épaisseur de la couche 112 est comprise entre 40 et 1000 nm, par exemple entre 50 et 500 nm.

A titre d'exemple, l'épaisseur de la couche 116 est supérieure à 500 nm, de sorte que la couche 102 ne modifie pas les propriétés optiques du résonateur 110.

A titre d'exemple, l'épaisseur de la couche 117 est supérieure à 500 nm de sorte que le substrat 100 soit suffisamment éloigné du résonateur 110 pour ne pas en modifier les propriétés optiques.

Bien entendu, la personne du métier est en mesure d'adapter les épaisseurs des couches 116, 112, 117 et 102, du substrat 100.

A titre d'exemple, lorsque le dispositif 1 est au repos (pas de mouvement relatif entre les parties 102A et 102B de la couche 102), on appelle Lg la longueur de chacune des portions 110C, Ltot la longueur totale du résonateur 110, n l'indice optique effectif dans les portions 110C et λ la longueur d'onde de résonance du résonateur 110. Lors d'un mouvement relatif des parties 102A et 102B l'une par rapport à l'autre, les portions 110C se déforment en conséquence d'où il résulte une variation DLg de la longueur de chacune des portions 110C et une variation Dn de l'indice optique effectif dans ces portions 110C. Cela se traduit par une modification Dλ de la longueur d'onde de résonance du résonateur 110. En considérant que les portions 110A et 110B ne sont pas déformées, les paramètres ci-dessus sont liés entre eux par l'équation suivante :
Dλ/λ = A*((DLg/Lg) + (Dn/n)), avec A un facteur de forme égal à 2*Lg/Ltot.

Le dispositif 1 décrit ici permet d'obtenir des gammes dynamiques de mesure ayant des étendues, ou largeurs ou amplitudes, plus importantes que celles des jauges de déformations connues. Par exemple, pour un dispositif 1 fonctionnant en boucle ouverte, c'est à dire sans asservissement de la longueur d'onde de la lumière fournie au guide d'onde 120 sur la longueur d'onde de résonance du résonateur 110, pour une bande passante de mesure égale à 10 KHz et fixée par l'électronique de lecture, et un laser ayant un bruit relatif d'intensité de l'ordre de 10⁻⁸, la gamme dynamique de mesure peut être supérieure à 10⁶, bien que la bande passante offerte par la cavité optique du dispositif 1, égale à λ/Q avec Q le facteur de qualité du résonateur 110, soit plus élevée. Bien que l'on ait indiqué ci-dessus que le dispositif 1 fonctionne en boucle ouverte, la personne du métier est en mesure de prévoir un asservissement de la longueur d'onde de la lumière circulant dans le guide d'onde 120 sur la longueur d'onde du résonateur 110 lorsque cette longueur d'onde de résonance varie suite à un déplacement des deux parties 102A et 102B de la couche 102 l'une par rapport à l'autre.

En outre, la bande passante de mesure optique est importante, par exemple de quelques GHz à 100 GHz, bien qu'elle soit en pratique limitée par la réponse mécanique du système. A titre de comparaison, une jauge piezzo-résistive présente une bande passante de mesure beaucoup plus petite et limitée par le produit de la résistance de la jauge par la capacité de la jauge (produit RC).

Par ailleurs, le dispositif 1 présente un seuil de bruit de lecture de la déformation du résonateur qui est très faible par rapport au seuil de bruit de lecture des jauges de déformation usuelles.

Dans le dispositif 1, la portion 122 du guide d'onde 120 est fixée à la couche 102. Le fait que cette portion 122 du guide d'onde 120 soit fixée à la partie 102A de la couche 102 lorsque la portion 122 est couplée optiquement à la partie 110A du résonateur, ou à la partie 102B de la couche 102 lorsque la portion 122 est couplée optiquement à la partie 110B du résonateur 110, permet de maintenir constant l'espace optique entre le guide d'onde 120 et le résonateur 110 où s'effectue le couplage optique du guide d'onde 120 avec le résonateur 110. Bien que cela ne soit pas revendiqué ici, la portion 122 du guide d'onde pourrait être fixée au substrat 100 plutôt qu'à la couche 102, mais dans ce cas on perdrait l'avantage susmentionné de maintenir constant l'espace de couplage optique entre le guide d'onde 120 et le résonateur 110, ce qui pourrait fausser la mesure.

La figure 6 représente, par une vue de dessus, partielle et schématique, une variante de réalisation d'une partie du dispositif 1 des figures 1 à 5, et, plus particulièrement des plots 114A, 114B du dispositif 1. En figure 6, seuls la portion 110B du résonateur 110, le plot 114B et les bras 118B ont été représentés, la description de ces éléments étant directement transposable à la portion 110A du résonateur 110, au plot 114A et aux bras 118A. Seules les différences entre le mode de réalisation décrit en relation avec les figures 1 à 5 et la variante de réalisation de la figure 6 sont ici décrites.

Dans cette variante, le plot 114B a, en vue de dessus, la forme d'un demi-disque plutôt que celle d'un disque comme cela a été décrit en relation avec les figures 1 à 5. Le centre du demi-disque 114B, c'est à dire d'un disque qui serait formé par le demi-disque 114B et un autre demi-disque, est confondu avec le centre de la portion 110B en arc de cercle, c'est à dire le centre d'un cercle qui serait formé par la portion 110B en demi-cercle et une autre portion en demi-cercle. En outre, la partie courbée du demi-disque 114B est tournée vers la portion 110B du résonateur, ou, plus exactement, tout le bord courbé du plot 114B est, dans un plan parallèle au substrat 100, en vis-à-vis de la portion 110B du résonateur 110.

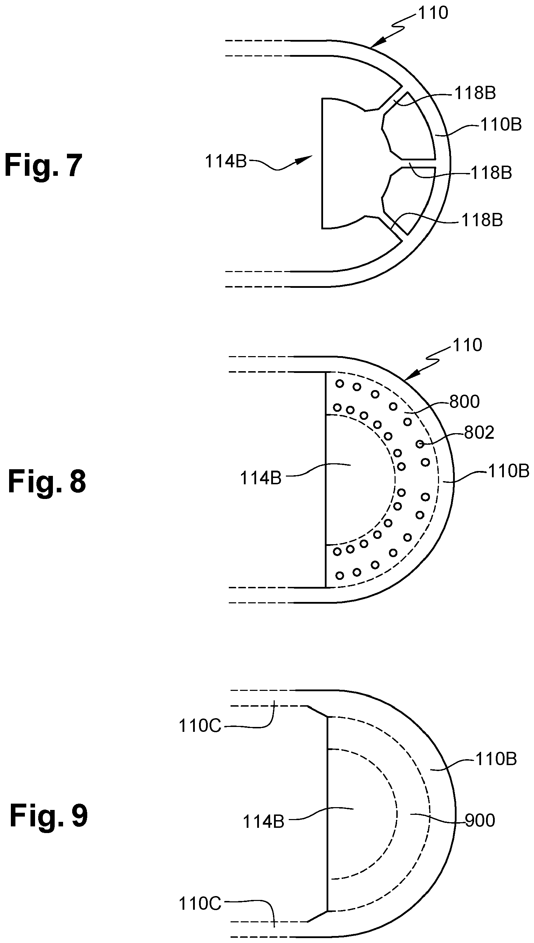

La figure 7 représente, par une vue de dessus, partielle et schématique, une autre variante de réalisation d'une partie du dispositif 1 des figures 1 à 5, et, plus particulièrement des bras 118A, 118B du dispositif 1. En figure 7, seuls la portion 110B du résonateur 110, le plot 114B et les bras 118B ont été représentés, la description de ces éléments étant directement transposable à la portion 110A du résonateur 110, au plot 114A et aux bras 118A. Seules les différences entre la variante de réalisation décrite en relation avec la figure 6 et la variante de réalisation de la figure 7 sont ici décrites.

Dans cette variante, les bras 118B sont des poutres définies dans la couche 112. Toutefois, au lieu d'avoir une section transversale constante sur toute sa longueur, chaque poutre 118B a une section transversale plus grande du côté du plot 114B que du côté de la portion 110B du résonateur 110. Par exemple, chaque poutre 118B a, du côté de son extrémité connectée au plot 114B, une section transversale qui augmente en se rapprochant du plot 114B.

Cette variante de réalisation s'applique à des cas où le plot 114B a une forme autre que celle d'un demi-disque, par exemple la forme d'un disque.

La prévision de poutres 118B ayant des sections transversales plus grandes du côté du plot 114B que de la portion 110B du résonateur 110 permet d'augmenter la rigidité des poutres 118B sans augmenter les pertes optiques dans le résonateur 110 par rapport au cas de poutres 118B qui auraient des sections transversales constantes sur toutes leurs longueurs.

La figure 8 représente, par une vue de dessus, partielle et schématique, encore une autre variante de réalisation d'une partie du dispositif 1 des figures 1 à 5, et, plus particulièrement de la façon dont les portions 110A et 110B sont fixées aux plots respectifs 114A et 114B par des portions de la couche 112. En figure 8, seuls la portion 110B du résonateur 110, le plot 114B et une portion 800 de la couche 112 fixant la portion 110B au plot 114B ont été représentés, la description de ces éléments étant directement transposable à la portion 110A du résonateur 110, au plot 114A et à une portion de la couche 112 fixant la portion 110A au plot 114A.

Seules les différences entre la variante de réalisation décrite en relation avec la figure 6 et la variante de réalisation de la figure 8 sont ici décrites.

Plus particulièrement, dans cette variante, au lieu que la portion 110B du résonateur 110 soit fixée au plot 114B par des bras 118B définis dans la couche 112, la portion 110B du résonateur 110 est fixée au plot 114B par une portion 800 de la couche 112.

La portion 800 de la couche 112 remplit l'espace entre le plot 114B et la portion 110B en demi-cercle du résonateur 110. Dans cet exemple où le plot 114 a la forme d'un demi-disque, l'ensemble de la portion 110B du résonateur 110, de la portion 800 de la couche 112 et du plot 114B, et, plus particulièrement, de la portion de couche 112 faisant partie du plot 114B, forme un demi-disque.

La portion 800 de la couche 112 est munie de plusieurs ouvertures traversantes 802, c'est-à-dire des ouvertures 802 traversant la couche 112 sur toute son épaisseur. En figure 8, seule une ouverture 802 est référencée pour ne pas surcharger la figure. Les ouvertures 802 sont par exemple configurées pour mettre en oeuvre une structure de cristal photonique dans la portion 800. A titre d'exemple alternatif, une partie des ouvertures 802 met en oeuvre une structure de cristal photonique et une autre partie des ouvertures 802 permet de générer des pertes de propagations élevées sur des modes optiques propagés dans la portion 800 et que l'on souhaite supprimer, c'est à dire filtrer. La structure de cristal photonique est configurée pour que la lumière guidée dans le résonateur 110 reste confinée dans le résonateur 110, et, plus particulièrement, dans la portion 110B du résonateur 110 lorsqu'elle se propage dans cette portion 110B. Dit autrement, la portion 800 et les ouvertures 802 sont configurées pour favoriser un seul mode de propagation optique dans la portion 110B.

Cette variante de réalisation s'applique à des cas où le plot 114B a une forme autre que celle d'un demi-disque, par exemple la forme d'un disque.

La figure 9 représente, par une vue de dessus, partielle et schématique, encore une autre variante de réalisation d'une partie du dispositif 1 des figures 1 à 5, et, plus particulièrement de la façon dont les portions 110A et 110B sont fixés aux plots respectifs 114A et 114B par des portions de la couche 112. En figure 9, seuls la portion 110B du résonateur 110, le plot 114B et une portion 900 de la couche 112 fixant la portion 110B au plot 114B ont été représentés, la description de ces éléments étant directement transposable à la portion 110A du résonateur 110, au plot 114A et à une portion de la couche 112 fixant la portion 110A au plot 114A.

Seules les différences entre la variante de réalisation décrite en relation avec la figure 8 et la variante de réalisation de la figure 9 sont ici décrites.

Plus particulièrement, dans cette variante, la portion 800 de couche 112 est remplacée par une portion 900 de la couche 112 identique à la portion 800 à la différence qu'elle ne comprend pas les ouvertures 802.

Dans cette variante, la propagation de la lumière dans la portion 110B est multimode, la portion 110B ayant alors une section transversale plus grande que celle des portions centrales 110C du résonateur qui est adaptée à une propagation monomode. De préférence, comme cela est illustré en figure 9, une transition progressive des dimensions de la section transversale de la portion 110B vers les dimensions de la section transversale des parties centrales des portions 110C peut être prévue, de sorte à assurer une variation progressive de l'indice optique effectif entre ces portions.

Dans les différents modes de réalisation et variantes de réalisation décrits ci-dessus, de préférence, la façon dont la portion 110A, respectivement 110B, du résonateur est fixée à la partie 102A, respectivement 102B, est, de préférence, configurée pour que les portions 110A et 110B du résonateur ne se déforment pas lors d'un déplacement relatif des parties 102A et 102B l'une par rapport à l'autre.

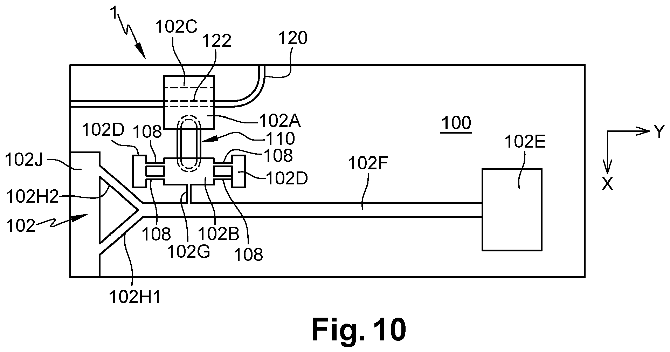

La figure 10 représente, par une vue de dessus schématique, un autre exemple de mode de réalisation du dispositif 1.

Dans ce mode de réalisation, de préférence la partie 102A de la couche 102 est fixe par rapport au substrat 100.

Dans ce mode de réalisation, la couche 102 du dispositif 1 comprend une partie 102E suspendue au-dessus du substrat 100. De préférence, la partie 102E a, dans un plan parallèle au substrat 100, des dimensions supérieures à celle de la partie 102B. Cette partie 102E est mobile par rapport au substrat 100 dans un plan parallèle au substrat 100, par exemple selon une direction identique à la direction X de déplacement des parties 102A et 102B l'une par rapport à l'autre.

Dans ce mode de réalisation, la couche 102 comprend en outre un bras de levier 102F, 102G. Le bras de levier 102F, 102G est configuré pour qu'un déplacement de la partie 102E dans la direction X entraîne un déplacement correspondant, mais plus faible, de la partie 102B dans la direction X. Le bras de levier 102F, 102G est lui aussi suspendu au-dessus du substrat 100.

Selon un mode de réalisation, le bras 102F, 102G est définie dans la couche 102. A titre de variante, tout ou partie du bras de levier 102F, 102G peut être défini dans une autre des couches du dispositif 1.

Le bras de levier 102F, 102G comprend ici une poutre 102F. Dans cet exemple, la poutre 102F est définie dans la couche 102. La poutre 102F s'étend en longueur dans la direction Y. La poutre 102F a une extrémité connectée mécaniquement à la partie 102E, et une autre extrémité fixe par rapport au substrat 100. Le bras de levier 102F, 102G comprend en outre un élément 102G. L'élément 102G est, dans cet exemple, défini dans la couche 102. La portion de couche 102G a, par exemple une forme de poutre alignée selon la direction X. La poutre 102G est suspendue au-dessus du substrat 100. La poutre 102G est connectée mécaniquement à la partie 102B et au bras 102F du côté de l'extrémité fixe du bras 102F. La partie 102G de la couche 102 est configurée pour transmettre les déplacements du bras 102F dans la direction X à la partie 102B de la couche 102. A titre d'exemple, la raideur de la partie 102G dans la direction X est au moins cinq fois plus grande que la raideur des portions 110C du résonateur 110 dans la direction X.

Plus particulièrement, dans l'exemple de la figure 10, la poutre 102F constitue un axe dont l'extrémité qui est fixée à la partie 102 peut se déplacer en rotation, dans un plan parallèle au substrat 100, autour de l'extrémité de l'axe qui est fixe par rapport au substrat. Cette rotation de l'extrémité de l'axe 102F qui est fixée à la partie 102E, c'est à dire la rotation de la partie 102E par rapport à l'extrémité fixe de l'axe 102F, est considéré localement comme une translation de la partie 102E dans la direction X par rapport au substrat 100. Ce mouvement de rotation est transmis sous la forme d'un mouvement de translation dans la direction X à celle des parties 102A et 102B qui est mobile par rapport au substrat 100, par l'intermédiaire de l'élément 102G.

Dit autrement, dans l'exemple de la figure 10, le bras de levier est configuré pour transformer un mouvement de rotation, dans un plan parallèle au substrat, de la partie 102E autour de l'extrémité fixe de l'axe 102F en un mouvement de translation, toujours dans un plan parallèle au substrat, de la partie 102B.

Grâce au bras de levier 102F, 102G il existe une relation linéaire reliant un déplacement de la partie 102E dans la direction X et un déplacement plus faible et correspondant de la partie 102B dans la direction X. Ainsi, le bras de levier 102F, 102G permet que les déplacements de la partie 102B dans la direction X restent dans une plage où le matériau des portions 110C du résonateur 110 est dans un régime de déformation élastique, tout en permettant la mesure de déplacement de la partie 102E dans la direction X et par rapport au substrat 100 qui soient bien plus grands que ceux de la partie 102B dans la direction X et par rapport au substrat 100. Par exemple, en appelant Lb la distance entre l'extrémité fixe du bras 102F et le centre de la partie 102E, et Lp la distance entre l'extrémité fixe du bras 102F et la connexion mécanique entre le bras 102F et la partie 102G, un déplacement de la partie 102E dans la direction X entraine un déplacement de la partie 102B dans la direction qui est Lb/Lp fois plus faible.

A titre d'exemple, l'extrémité fixe de l'axe ou poutre 102F est connectée aux extrémités de deux poutres 102H1 et 102H2, par exemple définies dans la couche 102, et formant, dans un plan parallèle au substrat 100, un angle droit entre elles au niveau de l'extrémité fixe du bras 102F. Les autres extrémités des poutres 102H1 et 102H2 sont connectés mécaniquement à une partie 102J de la couche 102 qui est fixe par rapport au substrat. Ainsi, les deux poutres 102H1 et 102H2 mettent en oeuvre une liaison pivot sur l'extrémité fixe du bras 102F. Dans le cas où une telle liaison pivot est mise en oeuvre, la raideur en torsion de la partie 102G de la couche 102 est, de préférence, inférieure à celle de la liaison pivot.

Bien que l'on ait décrit ici le cas où le bras de levier 102F permet qu'un mouvement de la partie 102E dans la direction X entraine un mouvement correspondant plus faible de la partie 102B dans la direction X, la personne du métier est en mesure de prévoir que le bras de levier 102F permette qu'un mouvement de la partie 102E dans la direction X entraine un mouvement correspondant plus grand de la partie 102B dans la direction X.

En outre, la personne du métier est en mesure de prévoir d'autres configurations de bras de levier permettant qu'un mouvement, dans un plan parallèle au substrat 100, de la partie 102E par rapport au substrat 100 entraîne, grâce au bras de levier, un mouvement correspondant dans ce plan des parties 102A et 102B l'une par rapport à l'autre.

Plus généralement, un bras de levier désigne, dans la présente description un système permettant de convertir un mouvement de rotation de la partie 102E en un mouvement de translation, de préférence selon la direction X, de celle des parties 102A et 102B qui est mobile par rapport au substrat 100. On a décrit ci-dessus un exemple dans le cas où un mouvement de la partie 102E dans un plan parallèle au substrat 100 est transmis par le bras de levier 102F à l'une des parties 102A et 102B (la partie 102B en figure 10) de sorte à résulter en un mouvement correspondant des parties 102A et 102B l'une par rapport à l'autre dans le plan. La personne du métier sera également en mesure de prévoir un dispositif 1 comprenant un bras de levier configuré pour qu'un mouvement de rotation d'une partie 102E de la couche 102 autour d'un axe parallèle au substrat 100 soit transmise sous la forme d'un mouvement de translation correspondant à celle des parties 102A et 102B qui est mobile par rapport au substrat 100. Dans ce cas, le mouvement de la partie 102E ne se fait pas dans un plan parallèle au substrat 100 comme c'est le cas en figure 10, mais au moins en partie dans une direction orthogonale au substrat 100.

A titre d'exemple, en reprenant la figure 10, en connectant mécaniquement ou en fixant mécaniquement un bord de la partie 102E le long de la poutre 102F, et non plus à une extrémité de celle-ci comme cela a été précédemment décrit, et en rendant fixe l'extrémité de l'axe 102F qui était auparavant mobile par rapport au substrat 100, la partie 102E peut alors se déplacer par rapport au substrat 100 selon un mouvement de rotation autour de l'axe 102F qui est fixe et parallèle au substrat 100. Ce mouvement de rotation autour d'un axe parallèle au substrat 100, et, plus particulièrement parallèle à l'axe Y dans cet exemple, est alors transmis par l'élément 102G sous la forme d'un mouvement de translation correspondant, dans un plan parallèle au substrat, de la partie 102A ou 102B qui est mobile par rapport au substrat 100, par exemple un mouvement de translation selon la direction X. Dans ce cas, l'élément 102G correspond par exemple à une portion de la couche 112, par exemple en forme de poutre alignée dans la direction X, ayant une extrémité fixée à la partie 102A ou 102B qui est mobile par rapport au substrat 100, et une autre extrémité fixée à la partie 102E.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'on ait décrit en relation avec les figures 1, 6, 7, 8 et 9 que la forme des plots 114A, 114B et leurs fixations aux portions respectives 110A, 110B du résonateur 110 par des poutres respectives 1181, 118B ou des portions 800 de couche 110 munies d'ouvertures sont identiques pour chaque plot, dans des variantes de réalisation non illustrées les deux plots 110A et 110B peuvent être différents l'un de l'autre et/ou la façon dont le plot 114A est fixé à la portion 110A peut être différente de celle dont le plot 114B est fixé à la portion 110B. Par exemple, les plots et résonateur peuvent être tels qu'illustrés en figure 8 en ce qui concerne le plot 114B et la portion 110B du résonateur 110, et tels qu'illustrés en figure 1 en ce qui concerne le plot 114A et la portion 110A du résonateur 110.

## Revendications

1. Dispositif (1) comprenant :
un substrat (100) ;
une première couche (102) reposant sur le substrat, la première couche comprenant une première partie (102A) et une deuxième partie (102B) mobiles l'une par rapport à l'autre ;
un résonateur optique annulaire (110) défini dans une deuxième couche (112), le dispositif **caractérisé par le fait que** le résonateur (100) comprend une première portion (110A) fixée à un premier plot d'ancrage (114A) connecté à la première partie (102A) de la première couche (102) et une deuxième portion (110B) fixée à un deuxième plot d'ancrage (114B) connecté à la deuxième partie (102B) de la première couche (102).

2. Dispositif selon la revendication 1, dans lequel les premier et deuxième plots d'ancrage (114A, 114B) sont disposés à l'intérieur du résonateur (110).

3. Dispositif selon la revendication 1 ou 2, dans lequel les première et deuxième portions (110A, 110B) du résonateur (110) ont chacune une forme de demi-cercle.

4. Dispositif selon la revendication 3 prise dans sa dépendance à la revendication 2, dans lequel :
le premier plot (114A) a une forme de demi-disque ayant son centre confondu avec le centre de la première portion (110A) du résonateur (110) et sa partie courbée tournée vers la première portion (110A) du résonateur (110) ; et/ou le deuxième plot (114B) a une forme de demi-disque ayant son centre confondu avec le centre de la deuxième portion (110B) du résonateur (110) et sa partie courbée tournée vers la deuxième portion (110B) du résonateur (110).

5. Dispositif selon l'une quelconque des revendications 1 à 4, dans lequel :
la première portion (110A) du résonateur est fixée au premier plot (114A) par des premières poutres (118A) définies dans la deuxième couche (112), chacune des premières poutres (118A) ayant une première extrémité connectée au résonateur (110) et une deuxième extrémité connectée au premier plot (114A) ; et/ou
la deuxième portion (110B) du résonateur est fixée au deuxième plot (114B) par des deuxièmes poutres (118B) définies dans la deuxième couche (112), chacune des deuxièmes poutres (118B) ayant une première extrémité connectée au résonateur (110) et une deuxième extrémité connectée au deuxième plot (114B).

6. Dispositif selon la revendication 5, dans lequel chacune des premières et deuxièmes poutres (118A, 118B) a une section transversale plus grande du côté de sa deuxième extrémité que du côté de sa première extrémité.

7. Dispositif selon l'une quelconque des revendications 1 à 4, dans lequel :
la première portion (110A) du résonateur est fixée au premier plot (114A) par une première portion (900) continue de la deuxième couche (112), l'ensemble de la première portion (110A) du résonateur, de la première portion (900) de la deuxième couche (112) et du premier plot (114A) ayant une forme de demi-disque ; et/ou
la deuxième portion (110B) du résonateur est fixée au deuxième plot (114B) par une deuxième portion (900) continue de la deuxième couche (112), l'ensemble de la deuxième portion (110B) du résonateur (110), de la deuxième portion (900) de la deuxième couche (112) et du deuxième plot (114B) ayant une forme de demi-disque.

8. Dispositif selon l'une quelconque des revendications 1 à 4, dans lequel :
la première portion (110A) du résonateur est fixée au premier plot (114A) par une première portion (800) de la deuxième couche (112), l'ensemble de la première portion (110A) du résonateur, de la première portion (800) de la deuxième couche (112) et du premier plot (114A) ayant une forme de demi-disque, et la première portion (800) de la deuxième couche (112) comprend des ouvertures traversantes (802) configurées pour favoriser un seul mode de propagation optique dans la première portion (110B) du résonateur (110) ; et/ou
la deuxième portion (110B) du résonateur est fixée au deuxième plot (114B) par une deuxième portion (800) de la deuxième couche (112), l'ensemble de la deuxième portion (110B) du résonateur (110), de la deuxième portion (800) de la deuxième couche (112) et du deuxième plot (114B) ayant une forme de demi-disque, et la deuxième portion (800) de la deuxième couche (112) comprend des ouvertures traversantes (802) configurées pour favoriser un seul mode de propagation optique dans la deuxième portion (110B) du résonateur (110).

9. Dispositif selon l'une quelconque des revendications 1 à 8, dans lequel le résonateur (110) comprend une troisième portion (110C) reliant la première portion (110A) du résonateur à la deuxième portion (110B) du résonateur, et une autre troisième portion (110C) reliant la deuxième portion (110B) du résonateur à la première portion (110A) du résonateur, l'ensemble des première, deuxième et troisièmes portions (110A, 110B, 110C) formant l'anneau du résonateur (110).

10. Dispositif selon la revendication 9, dans lequel chacune des première et deuxième portions (110A, 110B) du résonateur a une section transversale configurée pour permettre un guidage multimode de la lumière, et chacune des troisièmes portions (110C) a une portion centrale ayant une section configurée pour permettre un guidage monomode de la lumière.

11. Dispositif selon l'une quelconque des revendications 1 à 10, dans lequel les première et deuxième parties (102A, 102B) de la première couche (102) sont mobiles l'une par rapport à l'autre dans une première direction (X) parallèle au substrat (100).

12. Dispositif selon l'une quelconque des revendications 1 à 11, dans lequel la deuxième couche (112) est disposée entre le substrat (100) et la première couche (102), les première et deuxième parties (102A, 102B) de la première couche (102) étant suspendues au-dessus du substrat (100).

13. Dispositif selon l'une quelconque des revendications 1 à 12, dans lequel le dispositif (1) comprend en outre un guide d'onde (120) défini dans la deuxième couche (112) et ayant une portion (122) couplée optiquement au résonateur (110), ladite portion (122) du guide d'onde (120) étant soit couplée optiquement à la première portion (110A) du résonateur (110) et fixée à la première partie (102A) de la première couche (102), soit couplée optiquement à la deuxième portion (110B) du résonateur (110) et fixée à la deuxième partie (102B) de la première couche (102).

14. Dispositif selon l'une quelconque des revendications 1 à 13, dans lequel :
la première partie (102A) de la première couche (102) est fixe par rapport au substrat (100) ;
la première couche (102) comprend en outre une troisième partie (102E) suspendue au-dessus du substrat (100) et mobile par rapport au substrat (100) dans un plan parallèle au substrat ; et
le dispositif comprend un bras de levier (102F, 102G), par exemple au moins en partie défini dans la première couche (102), configuré pour qu'un déplacement de la troisième partie (102E) par rapport au substrat (100) dans ledit plan parallèle au substrat (100) entraine un déplacement correspondant de la deuxième partie (102B) de la première couche (102) par rapport à la première partie (102A) de la première couche (102) dans ledit plan parallèle au substrat (100) .

15. Dispositif selon l'une quelconque des revendications 1 à 13, dans lequel :
la première partie (102A) de la première couche (102) est fixe par rapport au substrat (100) ;
la première couche (102) comprend en outre une troisième partie (102E) suspendue au-dessus du substrat (100) et mobile en rotation autour d'un axe (Y) parallèle au substrat (100) ; et
le dispositif comprend un bras de levier (102F, 102G), par exemple en partie défini dans la première couche (102), configuré pour qu'une rotation de la troisième partie (102E) autour dudit axe (Y) entraine un déplacement correspondant de la deuxième partie (102B) de la première couche (102) par rapport à la première partie (102A) de la première couche (102) dans un plan parallèle au substrat (100) .

## Patentansprüche

1. Vorrichtung (1), die Folgendes aufweist:
ein Substrat (100);
eine erste Schicht (102), die auf dem Substrat aufliegt, wobei die erste Schicht einen ersten Teil (102A) und einen zweiten Teil (102B) aufweist, die in zueinander beweglich sind;
einen ringförmigen optischen Resonator (110), der in einer zweiten Schicht (112) definiert ist, wobei die Vorrichtung **dadurch gekennzeichnet ist, dass** der Resonator (110) einen ersten Abschnitt (110A), der an einem ersten Ankerkontakt (114A) befestigt ist, der mit dem ersten Teil (102A) der ersten Schicht (102) verbunden ist, und einen zweiten Abschnitt (110B) aufweist, der an einem zweiten Ankerkontakt (114B) befestigt ist, der mit dem zweiten Teil (102B) der ersten Schicht (102) verbunden ist.

2. Vorrichtung nach Anspruch 1, wobei die ersten und zweiten Ankerkontakte (114A, 114B) innerhalb des Resonators (110) angeordnet sind.

3. Vorrichtung nach Anspruch 1 oder 2, wobei die ersten und zweiten Abschnitte (110A, 110B) des Resonators (110) jeweils eine Halbkreisform aufweisen.

4. Vorrichtung nach Anspruch 3 in Abhängigkeit von Anspruch 2, wobei:
der erste Ankerkontakt (114A) die Form einer Halbscheibe hat, deren Mittelpunkt mit dem Mittelpunkt des ersten Abschnitts (110A) des Resonators (110) zusammenfällt und deren gekrümmter Abschnitt dem ersten Abschnitt (110A) des Resonators (110) zugewandt ist; und/oder
der zweite Kontakt (114B) die Form einer Halbscheibe hat, deren Mitte mit der Mitte des zweiten Abschnitts (110B) des Resonators (110) zusammenfällt und deren gekrümmter Abschnitt dem zweiten Abschnitt (110B) des Resonators (110) zugewandt ist.

5. Vorrichtung nach einem der Ansprüche 1 bis 4, wobei:
der erste Abschnitt (110A) des Resonators an dem ersten Kontakt (114A) durch erste Träger (118A) befestigt ist, die in der zweiten Schicht (112) definiert sind, wobei jeder der ersten Träger (118A) ein erstes Ende aufweist, das mit dem Resonator (110) verbunden ist, und ein zweites Ende, das mit dem ersten Kontakt (114A) verbunden ist; und/oder
der zweite Abschnitt (110B) des Resonators an dem zweiten Kontakt (114B) durch zweite Träger (118B) befestigt ist, die in der zweiten Schicht (112) definiert sind, wobei jeder der zweiten Träger (118B) ein erstes Ende aufweist, das mit dem Resonator (110) verbunden ist, und ein zweites Ende, das mit dem zweiten Kontakt (114B) verbunden ist.

6. Vorrichtung nach Anspruch 5, wobei jeder der ersten und zweiten Träger (118A, 118B) auf der Seite seines zweiten Endes eine größere Querschnittsfläche aufweist als auf der Seite seines ersten Endes.

7. Vorrichtung nach einem der Ansprüche 1 bis 4, wobei:
der erste Abschnitt (110A) des Resonators an dem ersten Kontakt (114A) durch einen ersten durchgehenden Abschnitt (900) der zweiten Schicht (112) befestigt ist, wobei die Anordnung aus erstem Abschnitts (110A) des Resonators, erstem Abschnitt (900) der zweiten Schicht (112) und erstem Kontakt (114A) eine Form einer Halbscheibe aufweist; und/oder
der zweite Abschnitt (110B) des Resonators an dem zweiten Kontakt (114B) durch einen zweiten durchgehenden Abschnitt (900) der zweiten Schicht (112) befestigt ist, wobei die Anordnung aus zweitem Abschnitt (110B) des Resonators (110), zweitem Abschnitt (900) der zweiten Schicht (112) und zweitem Kontakt (114B) eine Form einer Halbscheibe aufweist.

8. Vorrichtung nach einem der Ansprüche 1 bis 4, wobei:
der erste Abschnitt (110A) des Resonators an dem ersten Kontakt (114A) durch einen ersten Abschnitt (800) der zweiten Schicht (112) befestigt ist, wobei die Anordnung aus erstem Abschnitt (110A) des Resonators, erstem Abschnitt (800) der zweiten Schicht (112) ) und erstem Kontakt (114A) eine Form einer Halbscheibe aufweist und der erste Abschnitt (800) der zweiten Schicht (112) Durchgangsöffnungen (802) aufweist, die so konfiguriert sind, dass sie einen einzelnen optischen Ausbreitungsmodus in dem ersten Abschnitt (110B) des Resonators (110) begünstigen; und/oder
der zweite Abschnitt (110B) des Resonators an dem zweiten Kontakt (114B) durch einen zweiten Abschnitt (800) der zweiten Schicht (112) befestigt ist, wobei die Anordnung aus zweitem Abschnitt (110B) des Resonators (110), zweitem Abschnitt (800) der zweiten Schicht ( 112) und zweitem Kontakt (114B) eine Form einer Halbscheibe aufweist und der zweite Abschnitt (800) der zweiten Schicht (112) Durchgangsöffnungen (802) aufweist, die so konfiguriert sind, dass sie einen einzelnen optischen Ausbreitungsmodus in dem zweiten Abschnitt (110B) des Resonators (110) begünstigen.

9. Vorrichtung nach einem der Ansprüche 1 bis 8, wobei der Resonator (110) einen dritten Abschnitt (110C) aufweist, der den ersten Abschnitt (110A) des Resonators mit dem zweiten Abschnitt (110B) des Resonators koppelt, und einen weiteren dritten Abschnitt (110C), den den zweiten Teil (110B) des Resonators mit dem ersten Teil (110A) des Resonators koppelt, wobei die Anordnung aus erstem, zweitem und drittem Teil (110A, 110B, 110C) den Ring des Resonators (110) bildet.

10. Vorrichtung nach Anspruch 9, wobei jeder der ersten und zweiten Teile (110A, 110B) des Resonators einen Querschnitt aufweist, der so konfiguriert ist, dass er eine Multimoden-Lichtführung ermöglicht, und jeder der dritten Teile (110C) einen zentralen Teil mit einem Querschnitt aufweist, der so konfiguriert ist, dass er eine Monomoden-Lichtführung ermöglicht.

11. Vorrichtung gemäß einem der Ansprüche 1 bis 10, wobei der erste und der zweite Teil (102A, 102B) der ersten Schicht (102) in einer ersten Richtung (X) parallel zum Substrat (100) zueinander beweglich sind.

12. Vorrichtung nach einem der Ansprüche 1 bis 11, wobei die zweite Schicht (112) zwischen dem Substrat (100) und der ersten Schicht (102) angeordnet ist, wobei der erste und der zweite Teil (102A, 102B) der ersten Schicht (102) über dem Substrat (100) aufgehängt sind.

13. Vorrichtung nach einem der Ansprüche 1 bis 12, wobei die Vorrichtung (1) ferner einen Wellenleiter (120) aufweist, der in der zweiten Schicht (112) definiert ist und einen Abschnitt (122) aufweist, der optisch mit dem Resonator (110) gekoppelt ist, wobei der Abschnitt (122) des Wellenleiters (120) entweder optisch mit dem ersten Abschnitt (110A) des Resonators (110) gekoppelt und an dem ersten Teil (102A) der ersten Schicht (102) befestigt ist, oder optisch an den zweiten Abschnitt (110B) des Resonators (110) gekoppelt und an dem zweiten Teil (102B) der ersten Schicht (102) befestigt ist.

14. Vorrichtung gemäß einem der Ansprüche 1 bis 13, wobei:
der erste Teil (102A) der ersten Schicht (102) in Bezug auf das Substrat (100) fixiert ist;
die erste Schicht (102) ferner einen dritten Teil (102E) aufweist, der über dem Substrat (100) aufgehängt ist und in Bezug auf das Substrat (100) in einer Ebene parallel zum Substrat beweglich ist; und
die Vorrichtung einen Hebelarm (102F, 102G) aufweist, der beispielsweise zumindest teilweise in der ersten Schicht (102) definiert ist und so konfiguriert ist, dass eine Verschiebung des dritten Abschnitts (102E) in Bezug auf das Substrat (100) in der Ebene parallel zum Substrat (100) eine entsprechende Verschiebung des zweiten Teils (102B) der ersten Schicht (102) in Bezug auf den ersten Teil (102A) der ersten Schicht (102) in der Ebene parallel zum Substrat (100) verursacht.

15. Vorrichtung nach einem der Ansprüche 1 bis 13, wobei:
der erste Teil (102A) der ersten Schicht (102) in Bezug auf das Substrat (100) fixiert ist;
die erste Schicht (102) ferner einen dritten Teil (102E) aufweist, der über dem Substrat (100) aufgehängt ist und um eine Achse (Y) parallel zum Substrat (100) drehbar beweglich ist; und
die Vorrichtung einen Hebelarm (102F, 102G) aufweist, der beispielsweise teilweise in der ersten Schicht (102) definiert ist und so konfiguriert ist, dass eine Drehung des dritten Teils (102E) um die Achse (Y) eine entsprechende Verschiebung des zweiten Teils (102B) der ersten Schicht (102) in Bezug auf den ersten Teil (102A) der ersten Schicht (102) in einer Ebene parallel zum Substrat (100) bewirkt.

## Claims

1. Device (1) comprising:
a substrate (100);
a first layer (102) resting on the substrate, the first layer comprising a first part (102A) and a second part (102B) mobile with respect to each other;
an annular optical resonator (110) defined in a second layer (112), the device being **characterized in that** the resonator (110) comprises a first portion (110A) fixed to a first anchor pad (114A) connected to the first part (102A) of the first layer (102) and a second portion (110B) fixed to a second anchor pad (114B) connected to the second part (102B) of the first layer (102).

2. Device according to claim 1, wherein the first and second anchor pads (114A, 114B) are arranged inside of the resonator (110).

3. Device according to claim 1 or 2, wherein the first and second portions (110A, 110B) of the resonator (110) each have a semi-circle shape.

4. Device according to claim 3 as dependent on claim 2, wherein:
the first pad (114A) has a shape of a half-disk having its center forming one with the center of the first portion (110A) of the resonator (110) and its curved portion facing the first portion (110A) of the resonator (110); and/or
the second pad (114B) has a shape of a half-disk having its center forming one with the center of the second portion (110B) of the resonator (110) and its curved portion facing the second portion (110B) of the resonator (110).

5. Device according to any of claims 1 to 4, wherein:
the first portion (110A) of the resonator is fixed to the first pad (114A) by first beams (118A) defined in the second layer (112), each of the first beams (118A) having a first end connected to the resonator (110) and a second end connected to the first pad (114A); and/or
the second portion (110B) of the resonator is fixed to the second pad (114B) by second beams (118B) defined in the second layer (112), each of the second beams (118B) having a first end connected to the resonator (110) and a second end connected to the second pad (114B).

6. Device according to claim 5, wherein each of the first and second beams (118A, 118B) has a larger cross-section area on the side of its second end than on the side of its first end.

7. Device according to any of claims 1 to 4, wherein:
the first portion (110A) of the resonator is fixed to the first pad (114A) by a first continuous portion (900) of the second layer (112), the assembly of the first portion (110A) of the resonator, of the first portion (900) of the second layer (112), and of the first pad (114A) having a shape of a half-disk; and/or
the second portion (110B) of the resonator is fixed to the second pad (114B) by a second continuous portion (900) of the second layer (112), the assembly of the second portion (110B) of the resonator (110), of the second portion (900) of the second layer (112), and of the second pad (114B) having a shape of a half-disk.

8. Device according to any of claims 1 to 4, wherein:
the first portion (110A) of the resonator is fixed to the first pad (114A) by a first portion (800) of the second layer (112), the assembly of the first portion (110A) of the resonator, of the first portion (800) of the second layer (112), and of the first pad (114A) having a shape of a half-disk, and the first portion (800) of the second layer (112) comprises through openings (802) configured to favor a single optical propagation mode in the first portion (110B) of the resonator (110); and/or
the second portion (110B) of the resonator is fixed to the second pad (114B) by a second portion (800) of the second layer (112), the assembly of the second portion (110B) of the resonator (110), of the second portion (800) of the second layer (112), and of the second pad (114B) having a shape of a half-disk, and the second portion (800) of the second layer (112) comprises through openings (802) configured to favor a single optical propagation mode in the second portion (110B) of the resonator (110).

9. Device according to any of claims 1 to 8, wherein the resonator (110) comprises a third portion (110C) coupling the first portion (110A) of the resonator to the second portion (110B) of the resonator, and another third portion (110C) coupling the second portion (110B) of the resonator to the first portion (110A) of the resonator, the assembly of the first, second, and third portions (110A, 110B, 110C) forming the ring of the resonator (110).

10. Device according to claim 9, wherein each of the first and second portions (110A, 110B) of the resonator has a cross-section configured to allow a multimode guiding of light, and each of the third portions (110C) has a central portion having a cross-section configured to allow a monomode guiding of light.

11. Device according to any of claims 1 to 10, wherein the first and second parts (102A, 102B) of the first layer (102) are mobile with respect to each other in a first direction (X) parallel to the substrate (100).

12. Device according to any of claims 1 to 11, wherein the second layer (112) is arranged between the substrate (100) and the first layer (102), the first and second parts (102A, 102B) of the first layer (102) being suspended above the substrate (100).

13. Device according to any of claims 1 to 12, wherein the device (1) further comprises a waveguide (120) defined in the second layer (112) and having a portion (122) optically coupled to the resonator (110), said portion (122) of the waveguide (120) being either optically coupled to the first portion (110A) of the resonator (110) and fixed to the first part (102A) of the first layer (102), or optically coupled to the second portion (110B) of the resonator (110) and fixed to the second part (102B) of the first layer (102) .

14. Device according to any of claims 1 to 13, wherein:
the first part (102A) of the first layer (102) is fixed with respect to the substrate (100);
the first layer (102) further comprises a third part (102E) suspended above the substrate (100) and mobile with respect to the substrate (100) in a plane parallel to the substrate; and
the device comprises a lever arm (102F, 102G), for example at least partly defined in the first layer (102), configured so that a displacement of the third portion (102E) with respect to the substrate (100) in said plane parallel to the substrate (100) causes a corresponding displacement of the second part (102B) of the first layer (102) with respect to the first part (102A) of the first layer (102) in said plane parallel to the substrate (100).

15. Device according to any of claims 1 to 13, wherein:
the first part (102A) of the first layer (102) is fixed with respect to the substrate (100);
the first layer (102) further comprises a third part (102E) suspended above the substrate (100) and rotatably mobile around an axis (Y) parallel to the substrate (100); and
the device comprises a lever arm (102F, 102G), for example partly defined in the first layer (102), configured so that a rotation of the third part (102E) around said axis (Y) causes a corresponding displacement of the second part (102B) of the first layer (102) with respect to the first part (102A) of the first layer (102) in a plane parallel to the substrate (100).
